(19) Europäisches Patentamt
European Patent Office
Office européen des brevets

(11) **EP 4 073 190 B1**

(12) **EUROPEAN PATENT SPECIFICATION**

(45) Date of publication and mention of the grant of the patent:
**24.06.2026 Bulletin 2026/26**

(21) Application number: **20829648.3**

(22) Date of filing: **02.12.2020**

(51) International Patent Classification (IPC):
*C09J 7/38* (2018.01)    *C08K 5/521* (2006.01)

(52) Cooperative Patent Classification (CPC):
**C09J 7/385;** C08K 5/521; C09J 2203/306; C09J 2203/354; C09J 2301/408; C09J 2301/416; C09J 2433/00

(86) International application number:
**PCT/IB2020/061387**

(87) International publication number:
**WO 2021/116833 (17.06.2021 Gazette 2021/24)**

(54) **FLAME-RETARDANT PRESSURE SENSITIVE ADHESIVES**

FLAMMHEMMENDE HAFTKLEBSTOFFE

ADHÉSIFS SENSIBLES À LA PRESSION IGNIFUGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2019 US 201962945549 P**

(43) Date of publication of application:
**19.10.2022 Bulletin 2022/42**

(73) Proprietor: **3M Innovative Properties Company**
**Saint Paul, Minnesota 55133-3427 (US)**

(72) Inventors:
• **TERZIC, Denis**
  **Saint Paul, Minnesota 55133-3427 (US)**
• **PYUN, Eumi**
  **Saint Paul, Minnesota 55133-3427 (US)**
• **LORIMOR, Lynn E.**
  **Saint Paul, Minnesota 55133-3427 (US)**

(74) Representative: **Vossius & Partner**
**Patentanwälte Rechtsanwälte mbB**
**Siebertstraße 4**
**81675 München (DE)**

(56) References cited:
EP-A1- 2 698 406     EP-A2- 2 688 969
WO-A1-2007/149613    WO-A1-2016/109262
US-A1- 2012 172 477    US-A1- 2017 015 874

## Description

### Field of the Disclosure

The present disclosure relates generally to the field of adhesives and tapes, specifically to the field of pressure sensitive adhesives and tapes that have flame-retardant properties.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly useful for many applications.

Pressure sensitive adhesives are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones. Each of these classes of materials has advantages and disadvantages.

[US 2012/0172477 A1 provides a photocurable adhesive composition comprising a) a (meth)acrylate oligomer having one or more functional groups, b) a mono-functional monomer, a multi-functional monomer, or a mixture thereof, c) a photoinitiator, and d) a plasticizer having a refractive index of no less than 1.48.]

### Summary

The present invention is as described in the appended claims. The present disclosure relates generally to the field of adhesives and tapes, specifically to the field of pressure sensitive adhesives and tapes that have flame-retardant properties. In some embodiments, the adhesive article comprises a substrate layer with a first major surface and a second major surface, and a layer of pressure sensitive adhesive disposed on at least a portion of the first major surface of the substrate layer. The pressure sensitive adhesive comprises a UV-cured composition of a curable composition, where the curable composition comprises a polymerizable (meth)acrylate-based mixture, a polymerizable aromatic (meth)acrylate oligomer, a liquid flame retarding agent, and at least one UV initiator. The UV-cured composition is an optically clear pressure sensitive adhesive that has increased flame retarding properties compared to an identical adhesive article where the comparable pressure sensitive adhesive comprises a UV-cured composition comprising the polymerizable (meth) acrylate-based mixture, and at least one UV initiator.

Also disclosed are adhesive constructions. In some embodiments, the adhesive construction comprises a substrate with a first major surface and a second major surface and an adhesive article in contact with second major surface of the substrate. The adhesive articles are the optically clear flame retarding pressure sensitive adhesive articles described above.

### Detailed Description

The use of adhesives, especially pressure sensitive adhesives, is increasing. Among the areas in which the use of adhesives is increasing are the medical, electronic and optical industries, as well as consumer goods and public transportation. The requirements of these industries require adhesives with specialized features. For example, adhesives, such as pressure sensitive adhesives, are needed that provide additional features beyond the traditional properties of tack, peel adhesion and shear strength. New classes of materials are desirable to meet the increasingly demanding performance requirements for adhesives. Among the performance requirements are optical clarity and flame retardancy. Optical clarity is often desired because often the adhesive layer is a component of an optical article or device, and flame retardancy is desired to prevent or reduce the spread of fire to protect life and property.

A variety of techniques can be used to prepare flame-retardant adhesives. Often flame-retardant additives are added to the adhesive to give the adhesive flame-retardant properties. Flame retardants are widely used in the industry to reduce the flammability of plastic materials. These additives serve to make ignition of plastics more difficult, inhibit the combustion process, and limit heat release. There are a number of issues with adding flame-retardant additives to pressure sensitive adhesives. Many of the commonly used flame-retardant additives are halogen-containing, such as, for example, polychlorinated biphenyl and polybrominated diphenyl ethers. However, halogen-containing materials are increasing considered to be environmentally unfavorable and their use in adhesives is increasingly discouraged. A range of non-halogenated flame-retardant additives have been developed, but many of these can be problematic as additives for pressure sensitive adhesives. In some cases, the additives are liquids, and these liquids act as plasticizers for the adhesive matrix and this plasticization of the pressure sensitive adhesive is an issue as it affects the cohesive strength of the matrix. One technique that could be utilized to overcome this plasticization, is to crosslink the pressure sensitive adhesive or to add high Tg monomers to the pressure sensitive adhesive matrix to raise the cohesive strength and stiffness of the pressure sensitive adhesive matrix. However, this technique is problematic, since crosslinking or raising the cohesive strength of the pressure sensitive adhesive matrix can make the pressure sensitive adhesive too rigid and thus adversely affect the adhesive properties of the pressure sensitive adhesive.

Other flame-retardant additives are solids and thus do not plasticize the matrix, but can still be problematic, since the presence of solid additives can adversely affect the optical properties of the pressure sensitive adhesive. In some instances, the presence of solid flame-retardant additives can render the pressure sensitive adhesive layer opaque.

Disclosed herein are pressure sensitive adhesives that have a variety of desirable properties besides the normal desirable properties of adhesives (peel strength, shear holding power, and tackiness). The adhesives are flame-retardant and are optically clear. This flame retardancy is achieved in some embodiments with halogen-containing flame-retardant additives and in other embodiments without the use the halogen-containing flame-retardant additives. The combination of flame retardancy and optical clarity is achieved through the combination of a flame-retarding agent and a (meth)acrylate polymeric matrix with balanced properties of stiffness and flexibility.

Disclosed herein are adhesive articles and adhesive constructions that are optically clear and have flame-retardant properties. In some embodiments, the adhesive articles comprise a substrate and a layer of pressure sensitive adhesive disposed on the substrate layer, wherein the pressure sensitive adhesive comprises a UV-cured composition of a curable composition comprising a polymerizable (meth)acrylate-based mixture, a polymerizable aromatic (meth)acrylate oligomer, a liquid flame retarding agent, and at least one UV initiator.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. Examples of adhesives are pressure sensitive adhesives.

Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength to be cleanly removable from the adherend. Materials that have been found to function well as pressure sensitive adhesives are polymers designed and formulated to exhibit the requisite viscoelastic properties resulting in a desired balance of tack, peel adhesion, and shear holding power. Obtaining the proper balance of properties is not a simple process.

The terms "halogen-containing" or "halogen-free" refer to materials, particularly adhesive additives. Additives that are halogen-free are essentially free of halogen atoms such as fluorine, chlorine, bromine and iodine atoms. Additives that are halogen-containing have at least some hydrogen atoms replaced by halogen atoms.

Unless otherwise indicated, "optically transparent" refers to an article, film or adhesive that has a high light transmittance over at least a portion of the visible light spectrum (about 400 to about 700 nm). Typically, optically transparent articles have a luminous transmission of visible light of at least 80%. The term "transparent film" refers to a film having a thickness and when the film is disposed on a substrate, an image (disposed on or adjacent to the substrate) is visible through the thickness of the transparent film. In many embodiments, a transparent film allows the image to be seen through the thickness of the film without substantial loss of image clarity. In some embodiments, the transparent film has a matte or glossy finish.

Unless otherwise indicated, "optically clear" refers to an adhesive or article that has a high light transmittance over at least a portion of the visible light spectrum (about 400 to about 700 nm), and that exhibits low haze. Typically, optically clear articles have a luminous transmission of visible light of at least 90%, often at least 95%, and a haze of less than 10%, often less than 5%, or even less than 2%.

The term "(meth)acrylate" refers to monomeric acrylic or methacrylic esters of alcohols. Acrylate and methacrylate monomers or oligomers are referred to collectively herein as "(meth)acrylates". The term "(meth)acrylate-based" when used to describe polymers such as block copolymers, refers to polymers that are prepared from (meth)acrylate monomers. These polymers may contain only (meth)acrylate monomers or they may contain monomers that are co-reactive with (meth)acrylates.

As used herein, the term "polymer" refers to a polymeric material that is a homopolymer or a copolymer. As used herein, the term "homopolymer" refers to a polymeric material that is the reaction product of one monomer. As used herein, the term "copolymer" refers to a polymeric material that is the reaction product of at least two different monomers.

The terms "tackifying resin", "tackifying agent" and "tackifier" are used interchangeably herein.

The terms "plasticizing resin", "plasticizing agent" and "plasticizer" are used interchangeably herein.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, ethylhexyl, n-lauryl, isodecyl, tridecyl, tetradecyl, hexadecyl, and octadecyl.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

The term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

The term "heteroalkyl" refers to a monovalent group that includes at least two alkylene groups connected by a thio, oxy, or -NR- where R is alkyl. The heteroalkyl can be linear, branched, cyclic, substituted with alkyl groups, or combinations thereof. Some heteroalkyls are poloxyyalkylenes where the heteroatom is oxygen such as for example, $CH_3CH_2(OCH_2CH_2)_nOCH_2CH_2$-.

The term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

The term "heteroarylene" refers to a divalent group that is carbocyclic and aromatic and contains heteroatoms such as sulfur, oxygen, nitrogen or halogens such as fluorine, chlorine, bromine or iodine.

The term "aralkyl" refers to a monovalent group of formula -$R^a$-$Ar^a$ where $R^a$ is an alkylene and $Ar^a$ is an aryl (i.e., an alkylene is bonded to an aryl).

The terms "free radically polymerizable" and "ethylenically unsaturated" are used interchangeably and refer to a reactive group which contains a carbon-carbon double bond which is able to be polymerized via a free radical polymerization mechanism.

Disclosed herein are adhesive articles that are optically clear and have flame-retardant properties. The adhesive articles comprise a substrate with a first major surface and a second major surface and a layer of pressure sensitive adhesive disposed on at least a portion of the first major surface of the substrate layer. The pressure sensitive adhesive comprises a UV-cured composition of a curable composition comprising a polymerizable (meth)acrylate-based mixture, a polymerizable aromatic (meth)acrylate oligomer, a liquid flame retarding agent, and at least one UV initiator. The UV-cured composition is an optically clear pressure sensitive adhesive that has increased flame retarding properties compared to an identical adhesive article where the pressure sensitive adhesive comprises a UV-cured composition comprising the polymerizable (meth)acrylate-based mixture, and at least one UV initiator.

The adhesive articles, besides having the desirable optical clarity and flame-retardant properties, retain desirable peel adhesion properties. In some embodiments, the adhesive article has a peel adhesion of at least 40%, more typically at least 60% of the peel adhesion of an identical adhesive article where the pressure sensitive adhesive layer comprises a UV-cured composition comprising the (meth)acrylate-based mixture, and at least one UV initiator. In some embodiments, the adhesive article has a peel adhesion of at least 65% of the peel adhesion, at least 70% of the peel adhesion, or even at least 80% of the peel adhesion of an identical adhesive article where the pressure sensitive adhesive layer comprises a UV-cured composition comprising the (meth)acrylate-based mixture, and at least one UV initiator. Therefore, the adhesives retain the desirable properties of pressure sensitive adhesives with the added properties of optical clarity and flame-retardant properties.

A wide variety of substrates are suitable as the substrate layers of the adhesive articles. The substrate may be, for example, a tape backing, the surface of an article, or a release liner. Examples of suitable tape backings include, for example, papers and polymeric films. Examples of papers include clay-coated paper and polyethylene-coated paper. Examples of polymeric films include films comprising one or more polymers such as cellulose acetate butyrate; cellulose acetate propionate; cellulose triacetate; poly(meth)acrylates such as polymethyl methacrylate; polyesters such as polyethylene terephthalate, and polyethylene naphthalate; copolymers or blends based on naphthalene dicarboxylic acids; polyether sulfones; polyurethanes; polycarbonates; polyvinyl chloride; syndiotactic polystyrene; cyclic olefin copolymers; and polyolefins including polyethylene and polypropylene such as cast and biaxially oriented polypropylene, and fluorothermoplastic polymers. The substrate may comprise single or multiple layers, such as polyethylene-coated polyethylene terephthalate. The substrate may be primed or treated to impart some desired property to one or more of its surfaces. Examples of such treatments include corona, flame, plasma and chemical treatments. Particularly suitable tape backings are prepared from polyethylene terephthalate (PET), from polyurethanes, or from fluorothermoplastic polymers. Particularly suitable materials for polymeric film substrates include polyester, vinyl, polyolefin, polyurethane, or combinations thereof.

In other embodiments, the substrate is the surface of an article. A wide variety of articles surfaces are suitable and may be rigid (such as, for example, a metal plate, a glass plate, etc) or flexible (such as, for example, fabrics, woven and non-woven webs, foams, carpets, metallic foils, and the like).

The substrate may also be a release liner. Any suitable release liner can be used. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-30" and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

Because in some embodiments the adhesives are optically transparent or optically clear, the resulting articles can be optical elements or can be used to prepare optical elements. As used herein, the term "optical element" refers to an article that has an optical effect or optical application. The optical elements can be used, for example, in electronic displays, architectural applications, transportation applications, projection applications, photonics applications, and graphics applications. Suitable optical elements include, but are not limited to, screens or displays, cathode ray tubes, polarizers, reflectors, and the like.

Any suitable optical film can be used in the articles. As used herein, the term "optical film" refers to a film that can be used to produce an optical effect. The optical films are typically polymer-containing films that can be a single layer or multiple layers. The optical films are flexible and can be of any suitable thickness. The optical films often are at least partially transmissive, reflective, antireflective, polarizing, optically clear, or diffusive with respect to some wavelengths of the electromagnetic spectrum (e.g., wavelengths in the visible ultraviolet, or infrared regions of the electromagnetic spectrum). Exemplary optical films include, but are not limited to, visible mirror films, color mirror films, solar reflective films, infrared reflective films, ultraviolet reflective films, reflective polarizer films such as a brightness enhancement films and dual brightness enhancement films, absorptive polarizer films, optically clear films, tinted films, and antireflective films.

In some embodiments the optical film has a coating. In general, coatings are used to enhance the function of the film or provide additional functionality to the film. Examples of coatings include, for example, hardcoats, anti-fog coatings, anti-scratch coatings, privacy coatings or a combination thereof. Coatings such as hardcoats, anti-fog coatings, and anti-scratch coatings that provide enhanced durability, are desirable in applications such as, for example, touch screen sensors, display screens, graphics applications and the like. Examples of privacy coatings include, for example, blurry or hazy coatings to give obscured viewing or louvered films to limit the viewing angle.

Some optical films have multiple layers such as multiple layers of polymer-containing materials (e.g., polymers with or without dyes) or multiple layers of metal-containing material and polymeric materials. Some optical films have alternating layers of polymeric material with different indexes of refraction. Other optical films have alternating polymeric layers and metal-containing layers. Exemplary optical films are described in the following patents: U.S. Pat. No. 6,049,419 (Wheatley et al.); U.S. Pat. No. 5,223,465 (Wheatley et al.); U.S. Pat. No. 5,882,774 (Jonza et al.); U.S. Pat. No. 6,049,419 (Wheatley et al.); U.S. Pat. No. RE 34,605 (Schrenk et al.); U.S. Pat. No. 5,579,162 (Bjornard et al.), and U.S. Pat. No. 5,360,659 (Arends et al.).

The adhesive articles further comprise a layer of pressure sensitive adhesive disposed on at least a portion of the first major surface of the substrate layer. The layer of pressure sensitive adhesive is a UV-cured layer of a UV-curable composition. The UV-curable composition comprises a polymerizable (meth)acrylate-based mixture, a polymerizable aromatic (meth)acrylate oligomer, a liquid flame retarding agent, and at least one UV initiator.

In some embodiments, the UV-curable composition comprises: 61-75 wt% of the polymerizable (meth)acrylate-based mixture; 4-13 wt% polymerizable aromatic (meth)acrylate oligomer; 18-29 wt% of the liquid flame retarding agent; and at least one UV initiator, wherein the wt% is based upon the total weight of the curable composition minus the UV initiator. Each of these elements is described in detail below.

The thickness of the pressure sensitive adhesive layer depends upon a variety of factors, including the desired use for the adhesive article. Typically, the thickness of the adhesive layer tends to be greater than about 5 micrometers, greater than about 10 micrometers, greater than about 15 micrometers, or even greater than about 20 micrometers. The thickness is often less than about 1000 micrometers, less than about 250 micrometers, less than about 200 micrometers, or even less than about 175 micrometers. For example, the thickness can be from about 5 to about 1000 micrometers, from about 10 to about 500 micrometers, from about 25 to about 250 micrometers, or from about 50 to about 175 micrometers.

The polymerizable (meth)acrylate-based mixture may comprise a coatable syrup that is a partially polymerized mixture of (meth)acrylate-based monomers. Coatable syrups that are partially polymerized mixtures of (meth)acrylate-based monomers have been used to prepare adhesive articles by a coat and cure technique. In this technique a coatable mixture is coated on a web and then subjected to curing, generally photochemically. The web may be a backing, substrate, release liner or the like. It has been found that if the coatable mixture contains only monomers, the viscosity may not be sufficiently high to be readily coatable. The monomer mixture can be partially prepolymerized to give a coatable syrup as described in, for example, US Patent No. 6,339,111 (Moon, et al.).

The current polymerizable (meth)acrylate-based mixture comprises a mixture of at least one alkyl (meth)acrylate monomer and at least one reinforcing monomer. A wide variety of monomers are suitable for use as the alkyl (meth)acrylate monomers and the reinforcing monomers. Generally, if the polymerizable (meth)acrylate-based mixture were polymerized it would form a pressure sensitive adhesive. The pressure sensitive adhesive thus formed is used as the comparative adhesive to the adhesives of this disclosure.

Suitable alkyl (meth)acrylate monomers include those that, as a homopolymer, have a Tg of less than about 0°C. Examples of such alkyl (meth)acrylate monomers are those in which the alkyl groups comprise from about 2 carbon atoms to about 20 carbon atoms, and include, but are not limited to, n-butyl acrylate, 2-methylbutyl acrylate, 2-ethylhexyl acrylate, isooctyl acrylate, isononyl acrylate, isodecyl, acrylate, and mixtures thereof. Optionally, other vinyl monomers and alkyl (meth)acrylate monomers which, as homopolymers, have a Tg greater than 0°C, such as methyl acrylate, methyl methacrylate, isobornyl acrylate, vinyl acetate, and the like, may be utilized in conjunction with one or more of the alkyl (meth)acrylate monomers.

The polymerizable (meth)acrylate-based mixture also comprises at least one reinforcing monomer. The reinforcing monomer is acidic or basic monomer that is copolymerizable with the alkyl (meth)acrylate monomers, or styrene as a high Tg copolymerizable. A wide variety of copolymerizable acidic and basic monomers are suitable.

Useful acidic monomers include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, beta-carboxyethyl acrylate, 2-sulfoethyl methacrylate, styrenesulfonic acid, 2-acrylamido-2-methylpropanesulfonic acid, vinylphosphonic acid, and the like, and mixtures thereof. Due to their availability, typically ethylenically unsaturated carboxylic acids are used, with acrylic acid being a particularly suitable acidic monomer.

Exemplary basic monomers include N,N-dimethylaminopropyl methacrylamide (DMAPMAm); N,N-diethylaminopropyl methacrylamide (DEAPMAm); N,N-dimethylaminoethyl acrylate (DMAEA); N,N-diethylaminoethyl acrylate (DEAEA); N,N-dimethylaminopropyl acrylate (DMAPA); N,N-diethylaminopropyl acrylate (DEAPA); N,N-dimethylaminoethyl methacrylate (DMAEMA); N,N-diethylaminoethyl methacrylate (DEAEMA); N,N-dimethylaminoethyl acrylamide (DMAEAm); N,N-dimethylaminoethyl methacrylamide (DMAEMAm); N,N-diethylaminoethyl acrylamide (DEAEAm); N,N-diethylaminoethyl methacrylamide (DEAEMAm); N,N-dimethylaminoethyl vinyl ether (DMAEVE); N,N-diethylaminoethyl vinyl ether (DEAEVE); and mixtures thereof. Other useful basic monomers include vinylpyridine, vinylimidazole, tertiary amino-functionalized styrene (e.g., 4-(N,N-dimethylamino)-styrene (DMAS), 4-(N,N-diethylamino)-styrene (DEAS)), N-vinylpyrrolidone, N-vinylcaprolactam, acrylonitrile, N-vinylformamide, (meth)acrylamide, and mixtures thereof. Due to commercial availability, (meth)acrylamide is a particularly suitable basic monomer.

Typically, the alkyl (meth)acrylate monomer comprises the majority of the polymerizable (meth)acrylate mixture, meaning the alkyl (meth)acrylate or mixture of alkyl (meth)acrylates comprises greater than 50% by weight of the curable mixture, typically greater than 70% by weight of the curable mixture. Typically, the reinforcing monomer is present in amounts of 1-30% by weight, more typically 2-20%. Or even 2-10% by weight of the reaction mixture.

In some embodiments of the adhesive articles, the pressure sensitive adhesive layer is halogen-free. By halogen-free it is meant that the monomers and liquid flame retarding agent are essentially free of halogen atoms. In other embodiments, described below, the polymerizable aromatic (meth)acrylate oligomer contains halogen atoms.

In the halogen-free pressure sensitive adhesive layers, typically the polymerizable aromatic (meth)acrylate oligomer comprises at least one phosphorous-modified (meth)acrylate oligomer or monomer. Examples of phosphorous-modified (meth)acrylate oligomers include the difunctional acrylated phosphorus-containing oligomer RAYLOK 1722 commercially available from ALLNEX, and the trifunctional acrylated phosphorus-containing monomer VISCOAT 3PA from Kowa Company

In the halogen-free pressure sensitive adhesive layers, the liquid flame retarding agent is also halogen-free. In some embodiments, the liquid flame retarding agent comprises an aryl phosphate. A wide variety of aryl phosphates are suitable such as, for example, the isopropylated triphenyl phosphate mixture commercially available from ICL Industrial Products as PHOSFLEX 31L.

In other embodiments of the adhesive articles of this disclosure, the pressure sensitive adhesive layer is halogen-containing. In these embodiments, one or more of the elements in the UV-curable mixture that upon curing forms the pressure sensitive adhesive layer is halogen-containing. In some embodiments, the polymerizable aromatic (meth) acrylate oligomer comprises a halogen-modified polymerizable aromatic (meth)acrylate oligomer. The halogen-modified polymerizable aromatic (meth)acrylate oligomer comprises a compound of the general formula 1:

$$Ar^{hal}\text{-}O\text{-}(CO)\text{-}CR^1{=}CH_2 \qquad \text{Formula 1}$$

where $R^1$ is H or a methyl group; (CO) is a carbonyl group C=O; and $Ar^{hal}$ is an aromatic group selected from phenyl, substituted phenyl, or a fused aromatic group wherein at least one hydrogen atom is substituted with a halogen atom.

A wide variety of compounds according to Formula 1 are suitable. In some particularly suitable embodiments, the compound of Formula 1 $R^1$ is H; and $Ar^{hal}$ is a per-bromo phenyl ($C_6Br_5$) group. This compound is commercially available from Sartomer as CN2601. Additional compounds include the material commercially available from ICL Industrial Products as FR-1025.

In the halogen-containing embodiments, the liquid flame retarding agent may be halogenated or non-halogenated. Non-halogenated flame retarding agents are described above. A wide range of halogenated liquid flame retarding agents are suitable, for example the halogenated tri-alkyl phosphate esters such as the alkyl phosphate flame-retardant based on Tris(2-chloroisopropyl) phosphate commercially available from ICL Industrial Products as FYROL PCF.

In some embodiments, the polymerizable aromatic (meth)acrylate oligomer comprises a halogen-modified polymerizable aromatic (meth)acrylate oligomer, and the liquid flame retarding agent comprises a halogenated tri-alkyl phosphate ester.

The UV-curable composition also includes at least one photoinitiator, meaning that the initiator is activated by light, typically ultraviolet (UV) light. Examples of suitable free radical photoinitiators include DAROCURE 4265, IRGACURE 651, IRGACURE 184, IRGACURE 1173, IRGACURE 819, LUCIRIN TPO, LUCIRIN TPO-L, commercially available from BASF, Charlotte, NC.

A sufficient amount of initiator typically is used to carry out the polymerization to the desired temperature and conversion. The total initiator amount used is typically in the range of about 0.01 weight % to about 5.0 weight % based on the total monomer content.

The adhesive article may contain additional elements. The additional elements may be part of the substrate, i.e. the substrate can be a multi-layer article or may contain additional layers or coatings. The additional elements may be part of the pressure sensitive adhesive layer. Any suitable additive can be used as long as it does interfere with the curing of the reactive components or adversely affect the properties of the cured pressure sensitive adhesive layer, such as the flame retarding or optical properties. Examples of suitable non-reactive additives include plasticizers, tackifiers, nanoparticle fillers, bead fillers, antioxidants, viscosity control additives, refractive index modifying agents, or combinations thereof. In some embodiments, the additional element may be a release liner in contact with the layer of pressure sensitive adhesive. The release liner can protect the pressure sensitive adhesive layer until the adhesive layer is adhered to a surface to form a construction, as is described below. Any suitable release liner can be used. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-30" and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

Also, disclosed are adhesive constructions. The adhesive constructions comprise a second substrate with a first major surface and a second major surface and an adhesive article in contact with second major surface of the second substrate. The adhesive articles have been described above, comprising a first substrate layer with a first major surface and a second major surface, and a layer of pressure sensitive adhesive disposed on at least a portion of the first major surface of the substrate layer, wherein the pressure sensitive adhesive has a first major surface and a second major surface, wherein at least a portion of the second major surface of the pressure sensitive adhesive layer is in contact with the first major surface of the substrate layer and the first major surface of the pressure sensitive adhesive layer is in contact with the second major surface of the substrate and wherein the pressure sensitive adhesive comprises a UV-cured composition of a curable composition comprising a polymerizable (meth)acrylate-based mixture a polymerizable (meth)acrylate-based mixture, a polymerizable aromatic (meth)acrylate oligomer, a liquid flame retarding agent, and at least one UV initiator. Each of these elements is described in detail above.

A wide variety of second substrates are suitable. The second substrate can be the same as the first substrate or it can be different. In some embodiments, the second substrate comprises an external surface of a device or a vehicle. In some embodiments, the second substrate comprises a treated surface, wherein the treated surface comprises a film-covered surface, a painted surface, or a coated surface. Examples of surfaces to which the adhesive articles of this disclosure may be attached include transportation vehicles such as automobiles, trains, buses, subway cars, airplanes, and the like. Among the suitable surfaces are glass surfaces such as windows and the like.

**Examples**

Flame-retardant pressure sensitive adhesive compositions and films coated with the adhesives were made and characterized for material properties. These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company, St. Louis, Missouri unless otherwise noted. The following abbreviations are used herein: °C = degrees centigrade; h= hour; min= minute; mg = milligrams; kPa = kilopascal; N/m = Newton per meter; $\Delta E^*$= color difference; K/sec = degrees kelvin per second; J/g-K= joules per gram degrees kelvin; K = degrees kelvin; kJ/g = kilo joules per gram; $mJ/cm^2$ = millijoules per centimeter squared.

Materials List

| Abbreviation | Description and Source |
|---|---|
| ADH1 | 35% solids in 89/11 ethyl acetate/hexane solution acrylic pressure sensitive adhesive commercially available from Henkel Corporation, Bridgewater, NJ as LOCTITE DURO-TAK 109A. |
| LFR1 | Tris (2-chloroisopropyl) phosphate liquid flame-retardant commercially available from ICL Industrial Products America Inc., St. Louis, MO as FYROL PCF. |
| LFR2 | Alkyl aryl phosphate ester liquid flame-retardant commercially |
| | available from Valtris Specialty Chemicals, Independence, OH as SANTICIZER 2248. |
| LFR3 | Isopropylated triphenyl phosphate ester liquid flame-retardant commercially available from ICL Industrial Products America Inc., St. Louis, MO as PHOSFLEX 31L. |
| PFR1 | Brominated aromatic acrylate oligomer commercially available from Sartomer, Exton, PA as CN2601. |
| PFR2 | Difunctional phosphorus containing acrylate oligomer commercially available from Allnex as RAYLOK 1722. |
| PFR3 | Tris-acryloyloxyethyl phosphate monomer commercially available from Kowa Company Ltd., Nagoya, Japan as VISCOAT 3PA. |
| PM1 | Epoxy acrylate oligomer commercially available from Sartomer, PA as CN2602 |
| PI1 | 1-hydroxy-cyclohexyl-phenyl-ketone Photoinitiator commercially available from BASF Corporation as IRGACURE 184. |
| PI2 | 2,4,6-trimethylbenzoyldiphenylphosphine oxide photoinitiator commercially available from Lambson Ltd., Wetherby, United Kingdom as SPEEDCURE TPO. |
| L1 | Silicone release liner commercially available from 3M, St. Paul, MN as 33 BRAND EASY RELEASE LINER. |
| F1 | 51 micrometer primed polyester film commercially available from DuPont Teijin Films USA, Chester, VA as MELINEX 692 |
| F2 | 76 micrometer calendared vinyl film commercially available from American Renolit Corporation, La Porte, IN, as Semi-Gloss 504203. |

**Test Methods**

**Haze, Clarity, and Transmission**

Luminous haze, clarity, and transmission were measured according to ASTM D1003-13 using a BYK Haze-Gard Plus model AT-4725 (available from BYK-Gardner, Columbia, Md.). Adhesives were coated directly on polyester film and measured.

**Color**

The color difference of the adhesives was measured according to ASTM D2244-16 using an X-RITE spectrophotometer model Ci62 (available from X-Rite, Grand Rapids, MI) at a D65/10° illuminant/observer. The colorshift (ΔE*) of the film backed adhesive samples laminated to white vinyl film (available from 3M, St. Paul, MN as 3M CONTROLTAC IJ180MC-10) was calculated from the measured CIELAB color space values according to the following equation with the unadulterated adhesive serving as the reference:

$$\Delta E^* = \sqrt{(\Delta L^*)^2 + (\Delta a^*)^2 + (\Delta b^*)^2}$$

**Peel Adhesion Force**

Peel adhesion force was measured in accordance with ASTM D330-04 using an INSTRON model 5965 (available from Instron, Norwood, MA). The film backed adhesive samples were cut into 25.4 millimeter wide strips and hand applied with a squeegee to Q-Panel aluminum panels (available from Q-Lab, Westlake, OH as 6061T6 SP-104177) or aluminum panels overlaid with vinyl film (available from 3M, St. Paul, MN as 3M CONTROLTAC IJ180MC-10). Samples were conditioned for a specified dwell period at constant temperature and humidity (23 °C and 50% relative humidity) or an oven set to 65 °C. After the specified conditioning, the peel adhesion force was measured by peeling the sample from the substrate at an angle of 180 degrees at a removal rate of 30.5 centimeters per minute. Peel adhesion was measured in foot pounds per inch and converted to Newtons per meter (N/m).

**Micro Combustion Calorimetry (MCC)**

The flammability of the adhesives was measured according to Method A of ASTM D7309-13 using a microscale combustion calorimeter model MCC-2 (available from Govmark, Farmingdale, NY). A 2-3 mg sample of cured adhesive was heated at a rate of 1 K/sec in a nitrogen environment. The decomposition products were fully oxidized in a combustion chamber held at 900 °C in a 20% oxygen and 80% nitrogen environment. The heat release of the decomposition gases is determined from the mass of oxygen used to completely combust the sample. The following parameters were calculated from the data:

Heat release capacity $\eta_c$ (J/g-K), which is the maximum specific heat release rate divided by the heating rate.
Specific heat release $h_c$ (kJ/g), which is the net heat release over the entire temperature range.
Pyrolysis residue Yp (%), which is the fraction of sample mass remaining after testing.

**Examples**

Examples 1-8 (E1-E8)

Halogen-containing flame-retardant adhesive solutions were prepared by mixing ADH1, LFR1 or LFR2, PFR1, PI1, and PI2 by weight according to ratios in Table 1 in an amber bottle and diluting to 35% solids with ethyl acetate. The solutions were coated with a knife coater at a 203 micrometer gap onto L1 and dried in an oven set to 65° C for 10 minutes. The dried coatings were then run through a Honle JetCURE UV curing unit (available from Honle UV America, Inc., Marlboro, MA) under nitrogen flow to receive a dose of 60 mJ/cm$^2$ of UVC light. The cured adhesive coated release liners were laminated to film substrates with a laminator at 0.9 - 1.5 meters per minute at a nip pressure of 276 kPa.

Table 1. Halogen-containing Flame-retardant Adhesive Examples

| Example No. | ADH1 | LFR1 | LFR2 | PFR1 | PI1 | PI2 | Substrate |
|---|---|---|---|---|---|---|---|
| E1 | 74.5 | 18.7 | | 6.5 | 0.2 | 0.2 | F1 |
| E2 | 73.1 | 18.3 | | 8.1 | 0.2 | 0.2 | F1 |
| E3 | 63.2 | 27.0 | | 9.4 | 0.2 | 0.2 | F1 |
| E4 | 62.0 | 26.5 | | 11.0 | 0.3 | 0.3 | F1 |

(continued)

| Example No. | ADH1 | LFR1 | LFR2 | PFR1 | PI1 | PI2 | Substrate |
|---|---|---|---|---|---|---|---|
| E5 | 62.0 | 26.5 | | 11.0 | 0.3 | 0.3 | F2 |
| E6 | 62.0 | 13.3 | 13.3 | 11.0 | 0.3 | 0.3 | F1 |
| E7 | 62.0 | | 26.5 | 11.0 | 0.3 | 0.3 | F1 |
| E8 | 60.5 | 25.9 | | 13.0 | 0.3 | 0.3 | F1 |

Examples 9-16 (E9-E16)

Halogen-free flame-retardant adhesive solutions were prepared by mixing ADH1, LFR3, PFR2 or PFR3, PI1, and PI2 according to ratios in Table 2 in an amber bottle and diluting to 35% solids with ethyl acetate. The solutions were similarly coated and laminated to film substrates as described in examples 1-8.

Table 2. Halogen-Free Flame-retardant Adhesive Examples

| Example No. | ADH1 | LFR3 | PFR2 | PFR3 | PI1 | PI2 | Substrate |
|---|---|---|---|---|---|---|---|
| E9 | 74.5 | 18.7 | 6.5 | | 0.2 | 0.2 | F1 |
| E10 | 73.1 | 18.3 | 8.1 | | 0.2 | 0.2 | F1 |
| E11 | 63.2 | 27.0 | 9.4 | | 0.2 | 0.2 | F1 |
| E12 | 62.0 | 26.5 | 11.0 | | 0.3 | 0.3 | F1 |
| E13 | 62.0 | 26.5 | 11.0 | | 0.3 | 0.3 | F2 |
| E14 | 60.5 | 25.9 | 13.0 | | 0.3 | 0.3 | F1 |
| E15 | 67.1 | 28.7 | | 4.0 | 0.1 | 0.1 | F1 |
| E16 | 65.8 | 28.1 | | 5.8 | 0.1 | 0.1 | F1 |

Comparative examples 1-2 (C1-C2)

Comparative adhesive solutions without any flame-retardant additives were prepared by diluting ADH1 to 35% solids with ethyl acetate and processing in a similar fashion as examples 1-16.

Comparative examples 3-5 (C3-C5)

Comparative adhesive solutions utilizing a liquid flame-retardant additive and a non-flame-retardant polymerizable additive were prepared by mixing ADH1, LFR1, PM1, PI1, and PI2 by weight according to ratios in Table 3 in an amber bottle and diluting to 35% solids with methyl ethyl ketone. The solutions were similarly coated and laminated to film substrates as described in examples 1-16.

Table 3. Comparative Adhesive Examples

| Comparative Example No. | ADH1 | LFR1 | PM1 | PI1 | PI2 | Substrate |
|---|---|---|---|---|---|---|
| C1 | 100 | | | | | F1 |
| C2 | 100 | | | | | F2 |
| C3 | 74.5 | 18.7 | 6.5 | 0.2 | 0.2 | F1 |
| C4 | 62.0 | 26.5 | 11.0 | 0.3 | 0.3 | F1 |
| C5 | 62.0 | 26.5 | 11.0 | 0.3 | 0.3 | F2 |

**Results**

The examples were tested using the Test Methods listed above. Results are shown in Tables 4-6.

Table 4. Peel Adhesion Force Results

| | Peel Adhesion (N/m) | | | | | | | |
|---|---|---|---|---|---|---|---|---|
| | Aluminum Panel | | | | Vinyl Film | | | |
| Example No. | 20 min* | 24 hr* | 7 day* | 7 day 65 °C | 20 min* | 24 hr* | 7 day* | 7 day 65 °C |
| C1 | 5.8 | 6.4 | 6.8 | 6.6 | 6.1 | 9.9 | 10.6 | 5.6 |
| C2 | 6.4 | 7.1 | 7.0 | 4.9 | 5.9 | 8.3 | 8.5 | 6.3 |
| C3 | 9.0 | 8.7 | 9.6 | 6.7 | 6.6 | 8.7 | 9.3 | 5.0 |
| C4 | 6.5 | 6.9 | 6.9 | 7.1 | 6.0 | 7.0 | 7.0 | 5.0 |
| C5 | 5.3 | 5.3 | 5.3 | 4.0 | 4.1 | 4.2 | 4.3 | 5.2 |
| E1 | 5.0 | 7.0 | 8.1 | 5.4 | 5.4 | 8.4 | 8.3 | 4.4 |
| E2 | 5.1 | 6.8 | 7.8 | 5.4 | 5.2 | 7.7 | 7.9 | 4.5 |
| E3 | 6.1 | 6.5 | 6.7 | 5.5 | 4.9 | 6.0 | 6.7 | 4.2 |
| E4 | 6.1 | 6.2 | 6.3 | 5.8 | 4.4 | 4.8 | 5.1 | 4.6 |
| E5 | 4.5 | 4.5 | 4.6 | 4.7 | 3.7 | 3.8 | 3.7 | 5.3 |
| E6 | 6.3 | 6.5 | 6.6 | 3.6 | 3.7 | 4.6 | 4.6 | 4.6 |
| E7 | 5.1 | 5.0 | 4.3 | 2.6 | 2.8 | 3.4 | 3.2 | 4.4 |
| E8 | 5.5 | 5.1 | 4.9 | 6.0 | 3.7 | 4.1 | 4.2 | 4.9 |
| E9 | 8.3 | 9.0 | 8.9 | 5.8 | 6.1 | 7.9 | 7.5 | 6.8 |
| E10 | 8.5 | 9.0 | 8.8 | 5.8 | 6.4 | 8.3 | 7.8 | 6.5 |
| E11 | 6.6 | 6.9 | 7.3 | 5.1 | 6.4 | 6.9 | 7.3 | 5.9 |
| E12 | 7.0 | 7.3 | 8.1 | 5.3 | 7.4 | 7.4 | 8.0 | 5.9 |
| E13 | 6.3 | 7.1 | 6.9 | 3.1 | 4.9 | 6.8 | 7.2 | 6.2 |
| E14 | 6.6 | 7.0 | 7.3 | 5.2 | 6.1 | 7.1 | 7.7 | 6.0 |
| E15 | 5.5 | 5.8 | 5.9 | 7.1 | 3.8 | 4.3 | 4.2 | 4.7 |
| E16 | 5.0 | 4.3 | 4.9 | 6.5 | 3.3 | 3.7 | 4.0 | 5.1 |
| *(23 °C and 50% relative humidity) | | | | | | | | |

Table 5. Optical Results for Polyester Coated Examples

| Example No. | % Tran | % Haze | % Clarity | ΔE* |
|---|---|---|---|---|
| C1 | 92.5 | 0.58 | 100.0 | 0.00 |
| C3 | 92.0 | 23.7 | 99.2 | 0.59 |
| C4 | 92.6 | 38.3 | 99.5 | 0.91 |
| E1 | 92.6 | 0.56 | 100.0 | 0.19 |
| E2 | 92.7 | 0.60 | 100.0 | 0.19 |
| E3 | 92.6 | 0.57 | 100.0 | 0.33 |
| E4 | 92.7 | 0.55 | 100.0 | 0.34 |
| E6 | 92.2 | 0.48 | 100.0 | 0.28 |
| E7 | 92.3 | 0.52 | 100.0 | 0.28 |
| E8 | 92.7 | 0.59 | 100.0 | 0.38 |
| E9 | 92.2 | 0.74 | 99.9 | 0.24 |
| E10 | 92.3 | 1.10 | 99.8 | 0.25 |

(continued)

| Example No. | % Tran | % Haze | % Clarity | ΔE* |
|---|---|---|---|---|
| E11 | 92.2 | 0.82 | 100.0 | 0.26 |
| E12 | 92.4 | 0.98 | 99.8 | 0.25 |
| E14 | 92.4 | 1.85 | 99.7 | 0.26 |
| E15 | 92.3 | 0.57 | 100.0 | 0.22 |
| E16 | 92.2 | 0.58 | 100.0 | 0.18 |

Table 6. Flammability Results for Bare Adhesives Without Backings

| Example No. | $\eta_c$ (J/g-K) | $h_c$ (kJ/g) | $Y_p$ (%) |
|---|---|---|---|
| C1 | 410 | 26.2 | 2.9 |
| C3 | 333 | 23.4 | 2.8 |
| C4 | 315 | 21.7 | 4.7 |
| E1 | 282 | 23.6 | 0.6 |
| E2 | 297 | 24.0 | 2.4 |
| E3 | 260 | 22.5 | 1.3 |
| E4 | 275 | 23.0 | 1.8 |
| E6 | 314 | 25.1 | 3.3 |
| E7 | 307 | 25.3 | 4.1 |
| E8 | 250 | 22.0 | 2.0 |
| E9 | 331 | 26.4 | 2.5 |
| E10 | 325 | 26.1 | 2.4 |
| E11 | 322 | 26.6 | 2.4 |
| E12 | 313 | 26.4 | 2.4 |
| E14 | 332 | 26.4 | 1.9 |
| E15 | 329 | 26.3 | 1.1 |
| E16 | 312 | 25.0 | 2.6 |

**Claims**

1. An adhesive article comprising:

a substrate layer with a first major surface and a second major surface; and
a layer of pressure sensitive adhesive disposed on at least a portion of the first major surface of the substrate layer,
wherein the pressure sensitive adhesive comprises a UV-cured composition of a curable composition comprising:

a polymerizable (meth)acrylate-based mixture;
a polymerizable aromatic (meth)acrylate oligomer;
a liquid flame retarding agent; and
at least one UV initiator,

wherein the polymerizable (meth)acrylate-based mixture comprises a mixture of at least one alkyl (meth)acrylate monomer and at least one reinforcing monomer, wherein the at least one reinforcing monomer is selected from acidic or basic monomers that are copolymerizable with the alkyl (meth)acrylate monomers, or styrene, wherein the UV-cured composition is an optically clear pressure sensitive adhesive, wherein optically clear

12

means a luminous transmission of visible light (400 to 700 nm) of at least 90% and a haze of less than 10% when measured according to ASTM D1003-13, the UV-cured composition having increased flame retarding properties compared to an identical adhesive article wherein the pressure sensitive adhesive comprises a UV-cured composition comprising:

the polymerizable (meth)acrylate-based mixture; and
at least one UV initiator.

2. An adhesive construction comprising:

a substrate with a first major surface and a second major surface; and
an adhesive article in contact with second major surface of the substrate, wherein the adhesive article comprises:

a substrate layer with a first major surface and a second major surface; and
a layer of pressure sensitive adhesive disposed on at least a portion of the first major surface of the substrate layer, wherein the pressure sensitive adhesive has a first major surface and a second major surface, wherein at least a portion of the second major surface of the pressure sensitive adhesive layer is in contact with the first major surface of the substrate layer and the first major surface of the pressure sensitive adhesive layer is in contact with the second major surface of the substrate and wherein the pressure sensitive adhesive comprises a UV-cured composition of a curable composition comprising:

a polymerizable (meth)acrylate-based mixture;
a polymerizable aromatic (meth)acrylate oligomer;
a liquid flame retarding agent; and
at least one UV initiator, wherein the UV-cured composition is an optically clear pressure sensitive adhesive that is flame retarding,
wherein the polymerizable (meth)acrylate-based mixture comprises a mixture of at least one alkyl (meth)acrylate monomer and at least one reinforcing monomer, wherein the at least one reinforcing monomer is selected from acidic or basic monomers that are copolymerizable with the alkyl (meth)acrylate monomers, or styrene, and
wherein optically clear means a luminous transmission of visible light (400 to 700 nm) of at least 90% and a haze of less than 10% when measured according to ASTM D1003-13.

3. The adhesive article of claim 1 or the adhesive construction of claim 2, wherein the substrate layer comprises a polymeric film comprising polyester, vinyl, polyolefin, polyurethane, or combinations thereof.

4. The adhesive article of claim 1 or the adhesive construction of claim 2, wherein the polymerizable (meth)acrylate-based mixture comprises a coatable syrup comprising a partially polymerized mixture of (meth)acrylate-based monomers.

5. The adhesive article or the adhesive construction of claim 4, wherein the mixture of (meth)acrylate-based monomers comprises at least one alkyl (meth)acrylate monomer with 2-20 carbon atoms and the at least one reinforcing monomer.

6. The adhesive article or the adhesive construction of claim 5, wherein the at least one reinforcing monomer is selected from (meth)acrylic acid, (meth)acrylamide, and styrene.

7. The adhesive article of claim 1 or the adhesive construction of claim 2, wherein the pressure sensitive adhesive layer is halogen-free.

8. The adhesive article or the adhesive construction of claim 7, wherein the polymerizable aromatic (meth)acrylate oligomer comprises one or more phosphorous-modified (meth)acrylate oligomers, and the liquid flame retarding agent comprises an aryl phosphate.

9. The adhesive article of claim 1 or the adhesive construction of claim 2, wherein the polymerizable aromatic (meth)acrylate oligomer comprises a halogen-modified polymerizable aromatic (meth)acrylate oligomer, and the liquid flame retarding agent comprises a halogenated tri-alkyl phosphate ester.

10. The adhesive article or the adhesive construction of claim 9, wherein the halogen-modified polymerizable aromatic (meth)acrylate oligomer comprises a compound of the general formula 1:

$$Ar^{hal}\text{-}O\text{-}(CO)\text{-}CR^1=CH_2 \qquad \text{Formula 1}$$

wherein $R^1$ is H or a methyl group; (CO) is a carbonyl group C=O; and $Ar^{hal}$ is an aromatic group selected from phenyl, substituted phenyl, or a fused aromatic group wherein at least one hydrogen atom is substituted with a halogen atom.

11. The adhesive article or the adhesive construction of claim 9, wherein the halogen-modified polymerizable aromatic (meth)acrylate oligomer comprises a compound of the general formula 1:

$$Ar^{hal}\text{-}O\text{-}(CO)\text{-}CR^1=CH_2 \qquad \text{Formula 1}$$

wherein $R^1$ is H; (CO) is a carbonyl group C=O; and $Ar^{hal}$ is a per-bromo phenyl ($C_6Br_5$) group.

12. The adhesive article of claim 1 or the adhesive construction of claim 2, wherein the adhesive article has a peel adhesion of at least 60% of the peel adhesion of an identical adhesive article wherein the pressure sensitive adhesive layer comprises a UV-cured composition comprising:

   the (meth)acrylate-based mixture; and
   at least one UV initiator.

13. The adhesive article of claim 1, further comprising a release liner in contact with the layer of pressure sensitive adhesive.

14. The adhesive article of claim 1 or the adhesive construction of claim 2, wherein the pressure sensitive adhesive comprises a UV-cured composition of a curable composition comprising:

   61-75 wt% of the polymerizable (meth)acrylate-based mixture;
   4-13 wt% of the polymerizable aromatic (meth)acrylate oligomer;
   18-29 wt% of the liquid flame retarding agent; and
   at least one UV initiator, wherein the wt% is based upon the total weight of the curable composition minus the UV initiator.

**Patentansprüche**

1. Ein Klebegegenstand, umfassend:

   eine Substratschicht mit einer ersten Hauptoberfläche und einer zweiten Hauptoberfläche; und
   eine Schicht aus Haftkleber, die auf mindestens einem Abschnitt der ersten Hauptoberfläche der Substratschicht angeordnet ist, wobei der Haftkleber eine UV-gehärtete Zusammensetzung einer härtbaren Zusammensetzung umfasst, die umfasst:

      eine polymerisierbare (Meth)acrylat-basierte Mischung;
      ein polymerisierbares aromatisches (Meth)acrylat-Oligomer;
      ein flüssiges Flammschutzmittel; und
      mindestens einen UV-Initiator,
      wobei die polymerisierbare (Meth)acrylat-basierte Mischung eine Mischung aus mindestens einem Alkyl(meth)acrylatmonomer und mindestens einem verstärkenden Monomer umfasst, wobei das mindestens eine verstärkende Monomer ausgewählt ist aus sauren oder basischen Monomeren, die mit den Alkyl(meth)acrylatmonomeren copolymerisierbar sind, oder Styrol,
      wobei die UV-gehärtete Zusammensetzung ein optisch klarer Haftkleber ist, wobei optisch klar eine Lichtdurchlässigkeit von sichtbarem Licht (400 bis 700 nm) von mindestens 90 % und eine Trübung von weniger als 10 % bedeutet, wenn gemessen nach ASTM D1003-13, wobei die UV-gehärtete Zusammensetzung verbesserte Flammschutzeigenschaften im Vergleich zu einem identischen Klebegegenstand aufweist, wobei der Haftkleber eine UV-gehärtete Zusammensetzung umfasst, die umfasst:

die polymerisierbare (Meth)acrylat-basierte Mischung; und
mindestens einen UV-Initiator.

**2.** Eine Klebekonstruktion, umfassend:

ein Substrat mit einer ersten Hauptoberfläche und einer zweiten Hauptoberfläche; und
einen Klebegegenstand in Kontakt mit der zweiten Hauptoberfläche des Substrats, wobei der Klebegegenstand umfasst:

eine Substratschicht mit einer ersten Hauptoberfläche und einer zweiten Hauptoberfläche; und
eine Schicht aus Haftkleber, die auf mindestens einem Abschnitt der ersten Hauptoberfläche der Substratschicht angeordnet ist, wobei der Haftkleber eine erste Hauptoberfläche und eine zweite Hauptoberfläche aufweist, wobei mindestens ein Abschnitt der zweiten Hauptoberfläche der Haftklebeschicht in Kontakt mit der ersten Hauptoberfläche der Substratschicht steht und die erste Hauptoberfläche der Haftklebeschicht in Kontakt mit der zweiten Hauptoberfläche des Substrats steht und wobei der Haftkleber eine UV-gehärtete Zusammensetzung einer härtbaren Zusammensetzung umfasst, die umfasst:

eine polymerisierbare (Meth)acrylat-basierte Mischung;
ein polymerisierbares aromatisches (Meth)acrylat-Oligomer;
ein flüssiges Flammschutzmittel; und
mindestens einen UV-Initiator, wobei die UV-gehärtete Zusammensetzung ein optisch klarer Haftkleber ist, der flammhemmend ist,
wobei die polymerisierbare (Meth)acrylat-basierte Mischung eine Mischung aus mindestens einem Alkyl(meth)acrylat-Monomer und mindestens einem verstärkenden Monomer umfasst, wobei das mindestens eine verstärkende Monomer aus sauren oder basischen Monomeren, die mit den Alkyl(meth)acrylatMonomeren copolymerisierbar sind, oder Styrol ausgewählt ist, und
wobei optisch klar eine Lichtdurchlässigkeit von sichtbarem Licht (400 bis 700 nm) von mindestens 90 % und eine Trübung von weniger als 10 % bedeutet, wenn gemessen gemäß ASTM D1003-13.

**3.** Der Klebegegenstand nach Anspruch 1 oder die Klebekonstruktion nach Anspruch 2, wobei die Substratschicht eine Polymerfolie umfasst, die Polyester, Vinyl, Polyolefin, Polyurethan oder Kombinationen davon umfasst.

**4.** Der Klebegegenstand nach Anspruch 1 oder die Klebekonstruktion nach Anspruch 2, wobei die polymerisierbare (Meth)acrylat-basierte Mischung einen beschichtbaren Sirup umfasst, der eine teilweise polymerisierte Mischung aus (Meth)acrylat-basierten Monomeren umfasst.

**5.** Der Klebegegenstand oder die Klebekonstruktion nach Anspruch 4, wobei die Mischung aus (Meth)acrylat-basierten Monomeren mindestens ein Alkyl(meth)acrylat-Monomer mit 2-20 Kohlenstoffatomen und das mindestens eine verstärkende Monomer umfasst.

**6.** Der Klebegegenstand oder die Klebekonstruktion nach Anspruch 5, wobei das mindestens eine verstärkende Monomer ausgewählt ist aus (Meth)acrylsäure, (Meth)acrylamid und Styrol.

**7.** Der Klebegegenstand nach Anspruch 1 oder die Klebekonstruktion nach Anspruch 2, wobei die Haftklebeschicht halogenfrei ist.

**8.** Der Klebegegenstand oder die Klebekonstruktion nach Anspruch 7, wobei das polymerisierbare aromatische (Meth)acrylat-Oligomer ein oder mehrere phosphormodifizierte (Meth)acrylat-Oligomere umfasst, und das flüssige Flammschutzmittel ein Arylphosphat umfasst.

**9.** Der Klebegegenstand nach Anspruch 1 oder die Klebekonstruktion nach Anspruch 2, wobei das polymerisierbare aromatische (Meth)acrylat-Oligomer ein halogenmodifiziertes polymerisierbares aromatisches (Meth)acrylat-Oligomer umfasst, und das flüssige Flammschutzmittel einen halogenierten Trialkylphosphatester umfasst.

**10.** Der Klebegegenstand oder die Klebekonstruktion nach Anspruch 9, wobei das halogenmodifizierte polymerisierbare aromatische (Meth)acrylat-Oligomer eine Verbindung der allgemeinen Formel 1 umfasst:

$$Ar^{hal}\text{-O-(CO)-}CR^1=CH_2 \qquad \text{Formel 1}$$

wobei $R^1$ H oder eine Methylgruppe ist; (CO) eine Carbonylgruppe C=O ist; und $Ar^{hal}$ eine aromatische Gruppe ist, die ausgewählt ist aus Phenyl, substituiertem Phenyl oder einer kondensierten aromatischen Gruppe, wobei mindestens ein Wasserstoffatom durch ein Halogenatom substituiert ist.

**11.** Der Klebegegenstand oder die Klebekonstruktion nach Anspruch 9, wobei das halogenmodifizierte polymerisierbare aromatische (Meth)acrylat-Oligomer eine Verbindung der allgemeinen Formel 1 umfasst:

$$Ar^{hal}\text{-O-(CO)-}CR^1=CH_2 \qquad \text{Formel 1}$$

wobei $R^1$ H ist; (CO) eine Carbonylgruppe C=O ist; und $Ar^{hal}$ eine Perbromphenyl ($C_6Br_5$) Gruppe ist.

**12.** Der Klebegegenstand nach Anspruch 1 oder die Klebekonstruktion nach Anspruch 2, wobei der Klebegegenstand eine Schälhaftung von mindestens 60 % der Schälhaftung eines identischen Klebegegenstands aufweist, wobei die Haftklebeschicht eine UV-gehärtete Zusammensetzung umfasst, die umfasst:

die (Meth)acrylat-basierte Mischung; und
mindestens einen UV-Initiator.

**13.** Der Klebegegenstand nach Anspruch 1, ferner umfassend eine Trennschicht, die mit der Schicht des Haftklebers in Kontakt steht.

**14.** Der Klebegegenstand nach Anspruch 1 oder die Klebekonstruktion nach Anspruch 2, wobei der Haftkleber eine UV-gehärtete Zusammensetzung einer härtbaren Zusammensetzung umfasst, die umfasst:

61-75 Gew.-% der polymerisierbaren (Meth)acrylat-basierten Mischung;
4-13 Gew.-% des polymerisierbaren aromatischen (Meth)acrylat-Oligomers;
18-29 Gew.-% des flüssigen Flammschutzmittels; und
mindestens einen UV-Initiator, wobei die Gewichtsprozente auf dem Gesamtgewicht der härtbaren Zusammensetzung minus dem UV-Initiator basieren.

## Revendications

**1.** Article adhésif comprenant :

une couche de substrat avec une première surface principale et une seconde surface principale ; et
une couche d'adhésif sensible à la pression disposée sur au moins une partie de la première surface principale de la couche de substrat, dans lequel l'adhésif sensible à la pression comprend une composition durcie aux UV d'une composition durcissable comprenant :

un mélange polymérisable à base de (méth)acrylate ;
un oligomère (méth)acrylate aromatique polymérisable ;
un agent ignifuge liquide ; et
au moins un initiateur UV,
dans lequel le mélange polymérisable à base de (méth)acrylate comprend un mélange d'au moins un monomère (méth)acrylate d'alkyle et d'au moins un monomère renforçateur, dans lequel l'au moins un monomère renforçateur est choisi parmi des monomères acides ou basiques qui peuvent être copolymérisés avec les monomères (méth)acrylate d'alkyle, ou du styrène,
dans lequel la composition durcie aux UV est un adhésif sensible à la pression optiquement transparent, dans lequel « optiquement transparent » signifie une transmission lumineuse de la lumière visible (de 400 à 700 nm) d'au moins 90 % et un voile de moins de 10 % lorsqu'ils sont mesurés conformément à la norme ASTM D1003-13, la composition durcie aux UV ayant des propriétés ignifuges accrues par rapport à un article adhésif identique dans lequel l'adhésif sensible à la pression comprend une composition durcie aux UV comprenant :

le mélange polymérisable à base de (méth)acrylate ; et
au moins un initiateur UV.

2.  Construction adhésive comprenant :

    un substrat avec une première surface principale et une seconde surface principale ; et
    un article adhésif en contact avec la seconde surface principale du substrat, dans lequel l'article adhésif comprend :

    une couche de substrat avec une première surface principale et une seconde surface principale ; et
    une couche d'adhésif sensible à la pression disposée sur au moins une partie de la première surface principale de la couche de substrat, dans laquelle l'adhésif sensible à la pression a une première surface principale et une seconde surface principale, dans laquelle au moins une partie de la seconde surface principale de la couche d'adhésif sensible à la pression est en contact avec la première surface principale de la couche de substrat et la première surface principale de la couche d'adhésif sensible à la pression est en contact avec la seconde surface principale du substrat et dans laquelle l'adhésif sensible à la pression comprend une composition durcie aux UV d'une composition durcissable comprenant :

    un mélange polymérisable à base de (méth)acrylate ;
    un oligomère (méth)acrylate aromatique polymérisable ;
    un agent ignifuge liquide ; et
    au moins un initiateur UV, dans laquelle la composition durcie aux UV est un adhésif sensible à la pression optiquement transparent qui est ignifuge,
    dans laquelle le mélange polymérisable à base de (méth)acrylate comprend un mélange d'au moins un monomère (méth)acrylate d'alkyle et d'au moins un monomère renforçateur, dans laquelle l'au moins un monomère renforçateur est choisi parmi des monomères acides ou basiques qui peuvent être copolymérisés avec les monomères (méth)acrylate d'alkyle, ou du styrène, et
    dans laquelle « optiquement transparent » signifie une transmission lumineuse de la lumière visible (de 400 à 700 nm) d'au moins 90 % et un voile de moins de 10 % lorsqu'ils sont mesurés conformément à la norme ASTM D1003-13.

3.  Article adhésif selon la revendication 1 ou construction adhésive selon la revendication 2, dans lequel la couche de substrat comprend un film polymère comprenant du polyester, du vinyle, une polyoléfine, du polyuréthane ou des combinaisons de ceux-ci.

4.  Article adhésif selon la revendication 1 ou construction adhésive selon la revendication 2, dans lequel le mélange polymérisable à base de (méth)acrylate comprend un sirop à enduire comprenant un mélange partiellement polymérisé de monomères à base de (méth)acrylate.

5.  Article adhésif ou construction adhésive selon la revendication 4, dans lequel le mélange de monomères à base de (méth)acrylate comprend au moins un monomère (méth)acrylate d'alkyle ayant de 2 à 20 atomes de carbone et au moins un monomère renforçateur.

6.  Article adhésif ou construction adhésive selon la revendication 5, dans lequel l'au moins un monomère renforçateur est choisi parmi l'acide (méth)acrylique, le (méth)acrylamide et le styrène.

7.  Article adhésif selon la revendication 1 ou construction adhésive selon la revendication 2, dans lequel la couche adhésive sensible à la pression est exempte d'halogène.

8.  Article adhésif ou construction adhésive selon la revendication 7, dans lequel l'oligomère (méth)acrylate aromatique polymérisable comprend un ou plusieurs oligomères (méth)acrylate modifiés par phosphore, et l'agent ignifuge liquide comprend un phosphate d'aryle.

9.  Article adhésif selon la revendication 1 ou construction adhésive selon la revendication 2, dans lequel l'oligomère (méth)acrylate aromatique polymérisable comprend un oligomère (méth)acrylate aromatique polymérisable modifié par halogène, et l'agent ignifuge liquide comprend un ester de phosphate de trialkyle halogéné.

10. Article adhésif ou construction adhésive selon la revendication 9, dans lequel l'oligomère (méth)acrylate aromatique polymérisable modifié par halogène comprend un composé de la formule générale 1 :

$$Ar^{hal}\text{-}O\text{-}(CO)\text{-}CR^1=CH_2 \qquad \text{Formule 1}$$

dans laquelle $R^1$ est H ou un groupe méthyle ; (CO) est un groupe carbonyle C=O ; et $Ar^{hal}$ est un groupe aromatique choisi parmi phényle, phényle substitué ou un groupe aromatique fusionné dans lequel au moins un atome d'hydrogène est substitué par un atome d'halogène.

11. Article adhésif ou construction adhésive selon la revendication 9, dans lequel l'oligomère (méth)acrylate aromatique polymérisable modifié par halogène comprend un composé de la formule générale 1 :

$$Ar^{hal}\text{-O-(CO)-}CR^1=CH_2 \qquad \text{Formule 1}$$

dans laquelle $R^1$ est H ; (CO) est un groupe carbonyle C=O ; et $Ar^{hal}$ est un groupe perbromophényle ($C_6Br_5$).

12. Article adhésif selon la revendication 1 ou construction adhésive selon la revendication 2, dans lequel l'article adhésif a une adhérence au pelage égale à au moins 60 % de l'adhérence au pelage d'un article adhésif identique dans lequel la couche adhésive sensible à la pression comprend une composition durcie aux UV comprenant :

le mélange à base de (méth)acrylate ; et
au moins un initiateur UV.

13. Article adhésif selon la revendication 1, comprenant en outre une feuille anti-adhésive en contact avec la couche d'adhésif sensible à la pression.

14. Article adhésif selon la revendication 1 ou construction adhésive selon la revendication 2, dans lequel l'adhésif sensible à la pression comprend une composition durcie aux UV d'une composition durcissable comprenant :

de 61 à 75 % en poids du mélange polymérisable à base de (méth)acrylate ;
de 4 à 13 % en poids de l'oligomère (méth)acrylate aromatique polymérisable ;
de 18 à 29 % en poids de l'agent ignifuge liquide ; et
au moins un initiateur UV, dans lequel les pourcentages en poids sont basés sur le poids total de la composition durcissable, moins l'initiateur UV.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120172477 A1
- US 6049419 A, Wheatley
- US 5223465 A, Wheatley
- US 5882774 A, Jonza
- US 34605 A, Schrenk
- US 5579162 A, Bjornard
- US 5360659 A, Arends
- US 6339111 B, Moon
- FR 1025